Europäisches Patentamt

European Patent Office

Office européen des brevets

(11) Publication number: **0 155 191**
A2

# (12) EUROPEAN PATENT APPLICATION

(21) Application number: **85301830.7**

(22) Date of filing: **15.03.85**

(51) Int. Cl.⁴: **H 01 B 3/04**

(30) Priority: **16.03.84 GB 8406951**

(43) Date of publication of application: **18.09.85**
**Bulletin 85/38**

(84) Designated Contracting States: **AT BE CH DE FR IT LI LU NL SE**

(71) Applicant: **THE MICANITE & INSULATORS COMPANY LIMITED, Westinghouse Road Trafford Park, Manchester, M17 1PR (GB)**

(72) Inventor: **Smith, Gordon Frederick, 5 The Maples Woodlands Park, Nuneaton Warwickshire (GB)**

(74) Representative: **Kirby, Harold Victor Albert, Central Patent Department Wembley Office The General Electric Company, p.l.c. Hirst Research Centre East Lane, Wembley Middlesex HA9 7PP (GB)**

(54) **The manufacture of electrical insulating material.**

(57) A method of forming electrically insulating material of sheet or strip form comprises the steps of forming a slurry of mica flakes in a hardenable liquid resin forming a layer of the slurry of a thickness such that there is an overlapping of the mica flakes, consolidating the layer so formed by pressure.

EP 0 155 191 A2

This invention relates to a method of manufacturing a material primarily for use in electrical insulation and also to electrically insulating material manufactured according to the method.

Mica is well known as an excellent insulating material as it has a high dielectric strength with a great resistance to electrical stress and discharge, is resistant to deterioration and is relatively flexible. One method of utilising mica is in the form of a sheet or strip formed by bonding mica particles together to form a compact coherent layer, usually on a backing sheet of flexible insulating material such as woven glass cloth or plastics sheet. An object of the invention is to provide a method of manufacturing electrically insulating material of sheet or strip form utilising mica particles which results in a product having especially good electrical properties.

According to the invention a method of forming electrically insulating material of sheet or strip form comprises the steps of forming a slurry or mica flakes in a hardenable liquid resin, forming a layer of such slurry of a thickness such that there is an overlapping of the mica flakes, and consolidating the layer so formed by pressure.

It has been found that the application of pressure allows closer approach of the mica surfaces one to another, the close proximity of the surfaces allowing for the interaction of Van der Waals forces to pull the flakes into alignment, and this has been found to result in a product having improved electrical and mechanical properties.

Alignment of the mica flakes may be achieved by the application of pressure alone, or with heating to soften the resin. The applied pressure will depend on the resin softness but is usually at least 5.0 MPa.

The resin sheet or strip containing aligned mica flakes can be produced by this technique with or without a backing layer. However it has been found that the most practical approach is to coat a base material, of sheet or strip form formed for example of glass cloth or polyester film with the mica-containing resin slurry by single side or dip process, and subsequently hot-pressing the coated material to align the mica flakes.

The electrically insulating material made according to the invention may be applied at room temperature to prestrengthened or non-prestrengthened bunches of conductors or individual conductors in the form of wide films or strips made therefrom and can be further consolidated or hardened under pressure by heat treatment.

The liquid resin employed is preferably a thermosetting resin and may be in monomeric or polymeric form, with or without a solvent. If a solvent is used the mica-containing resin layer is preferably heated prior to the pressing step to effect removal of the solvent. Instead of a thermosetting resin a thermoplastic resin can in some cases be employed.

The choice of resin and base material, where provided, will be governed by the particular application and thermal class of the equipment which is to be insulated, that is to say the maximum temperature to which the insulation will normally be expected to be subjected in use of the equipment.

Examples of suitable resins and base materials for different thermal classes of equipment
are as follows :-

| | Base | Resin | Thermal Property |
|---|---|---|---|
| a) | Polyester Film | Epoxy | Class F |
| b) | Polyester Film | Polyester | Class F |
| c) | Glass | Silicone | Class H |
| d) | Polyimide Film | Polyimide | Class H and Class C |
| e) | Polyether etherketone (P.E.E.K.) Film | Polyimide | Class C |

Sheets of insulating material may be produced in accordance with the invention by a batch process by using a platen press for the consolidation step or by a continuous process using calendering equipment on the film screed. A sheet formed by either of these processes may be cut into strips to form tape if required.

The resultant product, in its preferred form, comprises a flexible semi-cured thermosetting sheet material on a soft thermoplastic sheet material, which can be used to provide an insulating covering over one or more conductors; the thermosetting material may be further press heated and fully cured by the user.

However, in addition to its use for insulating electrical machines, material manufactured in accordance with the invention may be used as a dielectric in capacitors.

Two specific methods which have been employed for the manufacture of insulating sheet or tape in accordance with the invention will now be described by way of example.

Example 1

Mica Grade FDP5 as supplied by Microfine Minerals and Chemicals Ltd., Derby was thoroughly blended with a polyester resin in a solvent, such as 1093/015 (Porters Paints), in proportions 50% mica and 50% resin by weight.

The mica-containing resin was dip-coated on to 0.025mm polyester film and the subsequent composite heated to 120°C to remove the solvent leaving a 290 g.s.m by weight layer polyester resin and mica on the polyester film.

The material was then placed in a platen press and subjected to a pressure of 6.0 MPa at 120°C for 2 minutes.

The final consolidated composite was a flexible brown translucent film having the following properties.

| | |
|---|---|
| Thickness, mm. | 0.15 |
| Electric Strength | |
| (1 layer) MV/m | 50 |
| Dissipation Factor 20°C | 0.05 |
| 155°C | 0.57 |
| Tensile Strength kN/m | 4 |

Example 2

Mica Grade FDP5 as supplied by Microfine Minerals and Chemicals Ltd., Derby, was thoroughly blended with an epoxy resin in a solvent, such as a mixture G2488 and as XD792 in the ratio 3:1 (Cibageigy), in proportions 47% mica and 53% resin by weight.

The mica-containing resin was dip-coated on to 0.025mm polyester film, and the subsequent composite heated to 120°C to remove the solvent and leave a 320 g.s.m by weight layer of epoxy resin and mica on the polyester film.

The material was then placed in a platen process and subjected to a pressure of 6.9 MPa at 90°C for 2 minutes.

The final consolidated composite was a flexible translucent film having the following properties.

| | |
|---|---|
| Thickness, mm. | 0.15 |
| Electric Strength | |
| (1 layer) MV/m | 57 |
| Dissipation Factor 20$^{\circ}$C | 0.01 |
| 155$^{\circ}$C | 0.50 |
| Tensile Strength kN/m | 4 |

CLAIMS

1.      A method of forming electrically insulating material of sheet or strip form comprising the steps of forming a slurry of mica flakes in a hardenable liquid resin, forming a layer of such slurry of a thickness such that there is an overlapping of the mica flakes, and consolidating the layer so formed by pressure.

2.      The method according to Claim 1 wherein the layer of slurry is heated to soften the resin either immediately prior to or during the application of pressure to the layer.

3.      The method according to Claim 1 in which the layer of slurry is coated on to strip or sheet material and is subsequently hot-pressed to effect said consolidation.

4.      The method according to Claim 3 wherein a said layer is applied to both sides of said strip or sheet material.

5.      The method according to Claim 3 or 4 carried out as a batch process utilising a platen press for applying pressure to the slurry layer to effect consolidation.

6.      The method according to any one of Claims 1 to 4 carried out as a continuous process utilising calendering equipment for applying pressure to the slurry layer to effect consolidation.

7.      The method according to any preceding Claim wherein the liquid resin is a thermosetting resin of either the monomeric or polymeric form, with or without a solvent.

8.      The method according to Claim 3, 4, 5 or 6 wherein the strip or sheet material is a polyester film and the resin is either an epoxy or polyester resin.

9.      The method according to Claim 3, 4, 5 or 6 wherein the strip or sheet material consists of glass cloth and the resin is a silicone resin.

10. The method according to Claim 3, 4, 5 or 6 wherein the strip or sheet material is a polyimide or polyether etherketone film and the resin is a polyimide resin.